# EUROPÄISCHE PATENTANMELDUNG

(11) **EP 0 761 870 A1**
(43) Veröffentlichungstag der Anmeldung: **12.03.1997**
(21) Anmeldenummer: 96110561.6
(22) Anmeldetag: 29.06.1996
(51) Int. Cl.: D21C 5/02, D21H 17/45

(54) **Verfahren zur Aufbereitung von Trockenausschuss einer Papier-, Karton- oder Streichmaschine**

(30) Priorität: 01.09.1995 DE 19532301
(71) Anmelder: Voith Sulzer Stoffaufbereitung GmbH, 88191 Ravensburg (DE)
(72) Erfinder: Mannes, Wolfgang, 88213 Ravensburg-Bavendorf (DE); Matzke, Wolfgang, Dr., 88276 Berg (DE); Selder, Harald, 88281 Schlier (DE)

(57) **Zusammenfassung**

Das Verfahren dient zur Aufbereitung von Trockenausschuß einer Papier-, Karton- oder Streichmaschine, wobei eine Suspension (S') durch mechanische Zerkleinerung (1) des Trockenausschusses (S) unter Beimischung von Wasser (W) hergestellt wird. Erfindungsgemäß wird die Suspension dann eingedickt (5), so daß ein Hochkonsistenzstoff (H) und ein Filtrat (F) entsteht. Das Filtrat (F) wird mit einem kationischen Neutralisierungsmittel (CH) vermischt, wodurch die anionischen Ladungsträger unschädlich gemacht werden. Die Neutralisationsprodukte und eventuell weitere Störstoffe können in bestimmten Ausführungen des Verfahrens durch einen Reinigungsschritt (7) entfernt werden. Der Hochkonsistenzstoff (H) gelangt nach Verdünnung als Pulpe (P) wieder zur Papiermaschine (10).

## Beschreibung

Die Erfindung betrifft Verfahren zur Aufbereitung von Trockenausschuß einer Papier-, Karton- oder Streichmaschine gemäß dem Oberbegriff des Anspruchs 1.

Bekanntlich können bei einer Papier- oder Kartonmaschine Betriebszustände auftreten, bei denen während der Papierproduktion das erzeugte Papier nicht als fertige Bahn aufgewickelt werden kann, sondern bereits vorher aus dem Bereich der Papiermaschine als sogenannter Ausschuß abgeführt werden muß. Ähnliches kann auch an Streichmaschinen geschehen, bei denen das bereits erzeugte und getrocknete Papier mit einer als Strich bezeichneten Schicht versehen wird. Das als Ausschuß anfallende Material ist in der Regel qualitativ hochwertig und sortenrein. Es wird üblicherweise zerkleinert und mit Wasser suspendiert. In den Fällen, bei denen die so anfallende Papierbahn bereits getrocknet ist, spricht man von Trockenausschuß.

Auch bei störungsfreiem Betrieb fällt in Form von Randstreifen ständig Material an, das wieder aufgelöst und dem Papiermaschinenprozeß wieder zugeführt werden muß.

Trockenausschuß ist in der Regel nur sehr wenig verschmutzt und sortenrein. Aus diesen Gründen steht im Stand der Technik die mechanische Zerkleinerung der bereits verfestigten Papierbahn sowie ihre Suspension in Wasser im Vordergrund der Verfahren zu ihrer Wiederaufbereitung. Die auf diese Weise gewonnene Suspension wird dann in die Maschinenbütte geführt, aus der Stoff zur Erzeugung dieser Papiersorte wieder entnommen wird. Neben der eigentlichen Papierfaser enthält Trockenausschuß Fein- und Füllstoffe, die bekanntlich zur Papiererzeugung ebenfalls erforderlich sind. Wird Trockenausschuß aus gestrichenem Papier aufgelöst, enthält die so erzeugte Suspension einen beträchtlichen Anteil des als Streichmasse aufgetragenen Stoffes. Heute werden in zunehmendem Maße den Streichmassen Binde- und Dispergiermittel zugesetzt, die dann ebenfalls in den Trockenausschuß gelangen. Solche Stoffe haben anionischen Charakter und können, wenn sie nicht ladungsneutralisiert werden, zu Störungen beim Wiedereinsatz der aus Trockenausschuß gewonnenen Suspension führen. Diese Ladungsneutralisierung kann, wie z.B. in der EP 0 444 788 B1 erwähnt, durch Chemikalien erfolgen, die eine kationische Wirkung haben und der Fasersuspension zugesetzt werden. Dadurch ist zwar das Ionen-Problem lösbar, die Chemikalien und Neutralisationsprodukte können jedoch bei der Papiererzeugung zu Qualitätsproblemen führen und sich im Papiermaschinen-Wasser-Kreislauf aufkonzentrieren.

Es ist Aufgabe der Erfindung, ein Verfahren zu schaffen, mit dem es gelingt, die Aufbereitung des Trockenausschusses weiter zu verbessern und insbesondere Probleme, die sich durch anionische Bestandteile und deren Neutralisierung ergeben könnten, zu vermeiden.

Diese Aufgabe wird durch die kennzeichnenden Maßnahmen des Anspruchs 1 in vollem Umfang gelöst.

Bei Bildung des Hochkonsistenzstoffes durch Eindickung können nämlich die genannten anionischen Bestandteile aus dem Papierfaserstoff abgeschieden und separat neutralisiert werden. Dadurch ist der Einsatz von kationischen Chemikalien wirksamer und kann mengenmäßig geringer ausfallen. Eine besonders vorteilhafte Ausgestaltung des Verfahrens liegt in einem der Neutralisierung nachfolgenden weiteren Reinigungsschritt. Auch dieser ist in Abwesenheit der Papierfasern viel effektiver durchzuführen.

Eine weitere günstige Ausgestaltung ist die mechanische Bearbeitung des Faserstoffs mit Hilfe von Scherkräften, um den Stoff zu dispergieren, insbesondere die Stippen und den sogenannten Strichgrieß aufzulösen. Strichgrieß bildet sich durch Agglomerieren von Streichmasse. Solche Scherkräfte sind hier besonders effektiv wirksam, weil durch das Eindicken ohnehin ein Hochkonsistenzstoff vorliegt. In anderen einfachen Fällen kann aber auch bereits eine Entstippung im Bereich zwischen 3 und 6 % Feststoffgehalt genügen.

Die Erfindung und ihre Vorteile wird beschrieben anhand von Zeichnungen. Dabei zeigen:
- Fig. 1 bis 4: Verfahrensschemata von 4 verschiedenen Ausführungsmöglichkeiten der Erfindung;
- Fig. 5: exemplarisches Anlagenschema.

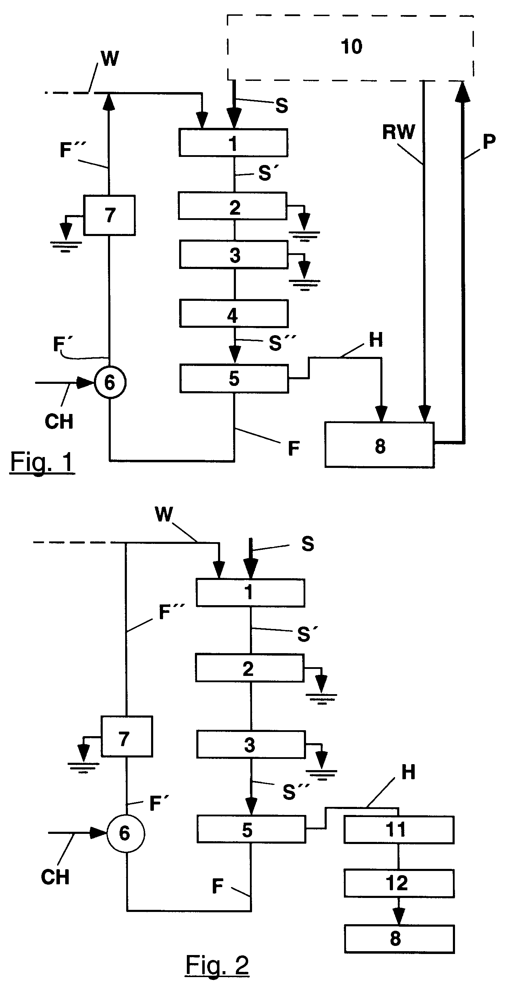

Im in Fig. 1 dargestellten Verfahrensschema erkennt man, daß der Trockenausschuß S zusammen mit Wasser W in einer mechanischen Zerkleinerung 1 zur Suspensions S' verarbeitet wird. Diesem Schritt können z.B. eine Schwerteilabscheidung 2 und eine Schmutzsortierung 3 folgen, in denen eventuell doch noch vorhandene Verunreinigungen abgeschieden werden können. Die Notwendigkeit zu diesen beiden Reinigungsschritten ist aber nicht immer gegeben. Vorteilhaft kann auch sein, wenn diesen eine Entstippung 4 folgt. Die so vorbereitete Suspension S'' wird nun durch Eindickung 5 zu einem Hochkonsistenzstoff H eingedickt, wobei ein Filtrat F anfällt. Der Hochkonsistenzstoff H wird nun als Vorrat 8 der ganz allgemein angedeuteten Papiermaschine 10 zur Verfügung gestellt. Er wird mit dem aus der Papiermaschine stammenden Rückwasser RW verdünnt und als Pulpe P an geeigneter Stelle wieder zugeleitet. Das bei der Eindickung 5 angefallene Filtrat F wird durch Zumischung 6 eines kationischen Neutralisierungsmittels CH behandelt, so daß sich ein behandeltes Filtrat F' bildet. Bei dem hier dargestellten Beispiel kann das Filtrat F' durch einen speziellen Reinigungsschritt 7 von Neutralisationsprodukten und sonstigen Störstoffen gereinigt werden, so daß sich ein neues Filtrat F'' ergibt, welches zusammen mit Wasser W zur Verdünnung des aus der Papiermaschine 10 stammenden Trockenausschusses S herangezogen werden kann. Der spezielle Reinigungsschritt 7 kann mit Vorteil eine Mikroflotation sein oder auch eine Zentrifugalbehandlung.

Fig. 2 zeigt eine andere Form des erfindungsgemäßen Verfahrens, bei der, im Gegensatz zu Fig. 1, die Entstippung nicht im Suspensionsbereich sondern im Hochkonsistenzbereich vorgenommen wird. Der von der Eindickung 5 stammende Hochkonsistenzstoff H gelangt in eine vorbereitende Behandlung 11, insbesondere Erwärmung, und dann in eine Dispergierung 12. Nach dieser Behandlung steht der Papierstoff als Vorrat 8 zur weiteren Verwendung zur Verfügung. Für die Dispergierbehandlung ist nicht unbedingt eine Erwärmung des Hochkonsistenzstoffes H erforderlich. Wie bereits ausgeführt, sind bei der Dispergierung die hohen Scherkräfte entscheidend. Diese können durch Knetmaschinen oder schnellaufende Disperger erzeugt werden.

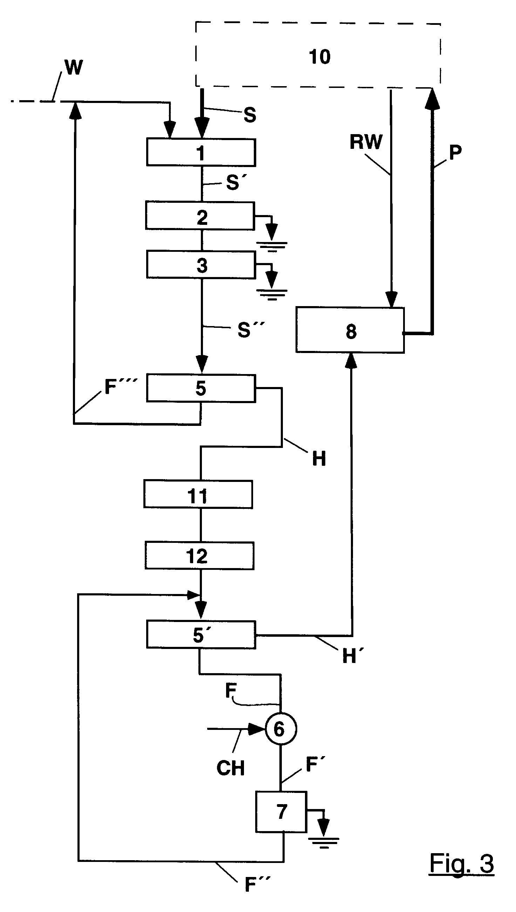

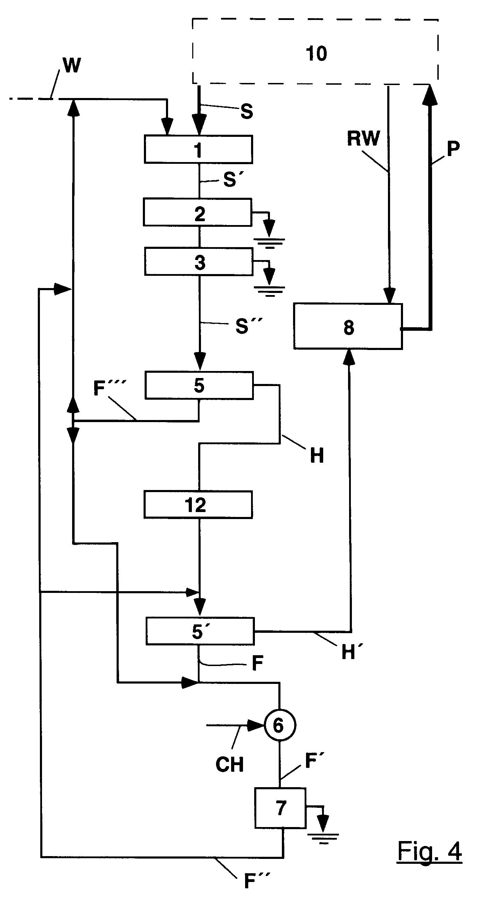

Die Verfahrensvarianten gemäß Fig. 3 und Fig. 4 beinhalten zwei aufeinanderfolgende Eindickungen 5 und 5'. Das Filtrat F''' aus der ersten Eindickstufe wird bei der Bildung der Suspension S' wiederverwendet. Dagegen wird das an der zweiten Eindickstufe gebildete Filtrat F - wie bereits erläutert - neutralisiert und eventuell gereinigt. Auch ein solches Verfahren dient der Lösung der gestellten Aufgabe, wobei der Wasserkreislauf mit Neutralisierung, also der durch das Filtrat F gebildete, höher konzentriert sein kann. Der nach der ersten Eindickung 5 anfallende Wasserkreislauf kann sich ohne schädliche Wirkung aufkonzentrieren. Eine Dispergierung 12 kann am Hochkonsistenzstoff H der ersten Eindickung 5 mit oder ohne weitere vorbereitende Behandlung 11, insbesondere Erwärmung, erfolgen.

Fig. 4 zeigt noch eine variable Filtratführung, bei der auch das Filtrat F''' der ersten Eindickung 5 zumindest teilweise in den Neutralisierungskreislauf gelangt und dann in den Ausschußlöser 13 zurückgeführt wird.

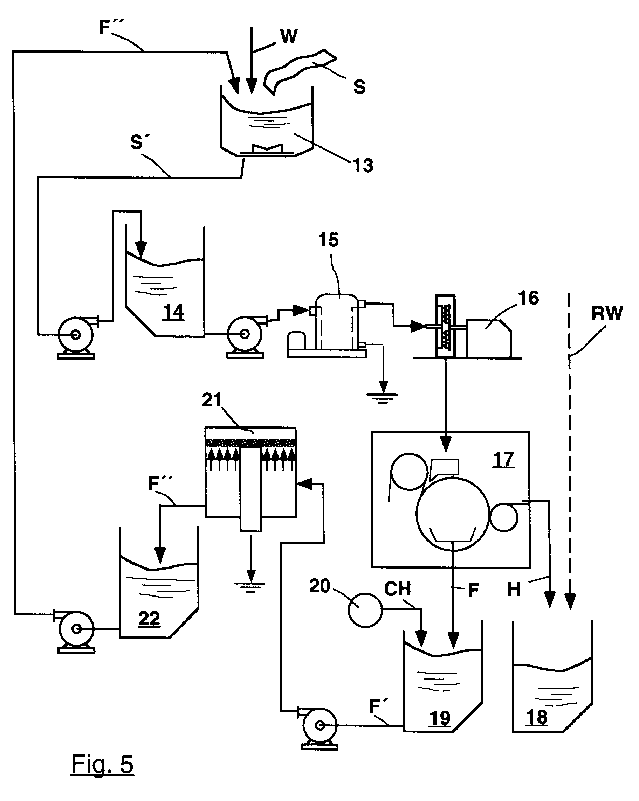

Fig. 5 zeigt eine mögliche Anlage zur Durchführung des erfindungsgemäßen Verfahrens. Der als Bahn dargestellte Trockenausschuß S wird zusammen mit Wasser W und rückgeführtem Filtrat F'' in einem Ausschußauflöser 13 suspendiert. Die so gebildete Suspension S' gelangt über eine Pumpe in die Ableerbütte 14. Von dort wird sie über einen Sortierer 15 gepumpt, der zumindest einen Teil der Verunreinigungen ausscheidet und gelangt dann in den Entstipper 16 zur Auflösung der Stippen. Die entstippte und gereinigte Suspension S'' wird in einer Siebpresse 17 eingedickt, die z.B. ein umlaufendes Endlossieb enthalten kann, auf das die Suspension aufgebracht und dadurch entwässert wird. Auch eine Schneckenpresse mit Siebmantel ist verwendbar. Es entsteht das Filtrat F, welches die feinen und gelösten Stoffe enthält sowie der Hochkonsistenzstoff H. Letzterer wird zusammen mit dem Rückwasser RW aus der Papiermaschine in der Bütte 18 verdünnt und steht als Vorrat zur Verfügung. Zur Verdünnung kann natürlich auch jedes andere Wasser mit der notwendigen Qualität verwendet werden. Das Filtrat F wird in der Bütte 19 mit dem Neutralisierungsmittel CH vermischt. Zum Dosieren dient die Dosierstation 20. Das so neutralisierte Filtrat F' wird in eine Flotationsvorrichtung 21 gepumpt, um die Neutralisationsprodukte im Flotationsschaum auszuscheiden, eventuell zusammen mit anderen unerwünschten Stoffen. Diese Technologie - auch Mikroflotaion oder Entspannungsflotation genannt - ist der Fachwelt bekannt. Andere hier nicht gezeigte Verfahren wären z.B. Feinfilterung oder Umkehrosmose. Auch die Anwendung hochwirksamer Cleaner oder Zentrifugen an dieser Stelle ist vorstellbar. Bei diesem Reinigungsvorgang bildet sich ein klares Filtrat F'', das in der Bütte 22 gesammelt und im Bedarfsfalle in den Ausschußauflöser 13 gepumpt werden kann. Nicht gezeichnet, da dem Fachmann geläufig, sind die Regeleinrichtungen. Diese können insbesondere die Dosierstation 20 für das Neutralisierungsmittel CH entsprechend den Erfordernissen regeln. Wie bereits erwähnt, ist dieses Anlagenschema ein Beispiel zur Durchführung des erfinderungsgemäßen Verfahrens. Aus den Verfahrensansprüchen lassen sich auch andere Anlagenschaltungen herleiten.

## Patentansprüche

1. Verfahren zur Aufbereitung von Trockenausschuß einer Papier-, Karton- oder Streichmaschine mit folgenden Schritten:
1.1 Herstellung einer Suspension (S') durch mechanische Zerkleinerung (1) des Trockenausschusses (S) unter Beimischung von Wasser(W)
1.2 Zumischung (6) eines kationischen Neutralisierungsmittels (CH)
1.3 Auflösung der in der Suspension (S') enthaltenen Stippen mindestens so weit, daß die Suspension zur Herstellung von Papier geeignet ist,
**dadurch gekennzeichnet**,
daß die Suspension zu einem Hochkonsistenzstoff (H, H') mit einem Feststoffgehalt von mindestens 20 % eingedickt und daß das kationische Neutralisierungsmittel (CH) in zumindest einen Teil des dabei anfallenden Filtrats (F) zugemischt wird.

2. Verfahren nach Anspruch 1,
**dadurch gekennzeichnet**,
daß die Suspension (S') auf einen Feststoffgehalt von mindestens 35 % eingedickt wird.

3. Verfahren nach Anspruch 1 oder 2,
**dadurch gekennzeichnet**,
daß das mit dem kationischen Neutralisierungsmittel (CH) versetzte Filtrat (F') einem speziellen Reinigungsschritt (7) unterzogen wird.

4. Verfahren nach Anspruch 3,
**dadurch gekennzeichnet**,
daß der spezielle Reinigungsschritt (7) eine Flotation ist, in der mindestens 80% der Feststoffe von Wasser getrennt werden.

5. Verfahren nach Anspruch 3,
**dadurch gekennzeichnet**,
daß der spezielle Reinigungsschritt (7) eine Filtrierung ist, in der Feststoffe von Wasser getrennt werden.

6. Verfahren nach Anspruch 3,
**dadurch gekennzeichnet**,
daß der spezielle Reinigungsschritt (7) eine Zentrifugalstufe mit einer Zentrifugalbeschleunigung von mindestens 500 kgm/s² ist, in der Feststoffe von Wasser getrennt werden.

7. Verfahren nach einem der voranstehenden Ansprüche,
**dadurch gekennzeichnet**,
daß der Hochkonsistenzstoff (H, H') durch Scherkräfte mechanisch bearbeitet und dadurch dispergiert wird, wobei eine spezifische Arbeit von mindestens 40 kWh/t angewendet wird.

8. Verfahren nach Anspruch 7,
**dadurch gekennzeichnet**,
daß die spezifische Arbeit mindestens 80 kWh/t beträgt.

9. Verfahren nach Anspruch 7 oder 8,
**dadurch gekennzeichnet**,
daß die mechanische Bearbeitung bei einer Temperatur über 80^{o} C erfolgt.

10. Verfahren nach einem der voranstehenden Ansprüche,
**dadurch gekennzeichnet**,
daß im speziellen Reinigungsschritt (7) gereinigtes Filtrat (F'') wieder zur Bildung der wässrigen Suspension aus dem Trockenausschuß (S) verwendet wird.

11. Verfahren nach Anspruch 8 oder 9,
**dadurch gekennzeichnet**,
daß die Eindickung (5) in zwei Stufen vorgenommen wird, wobei die Dispergierung (12) nach der ersten Stufe und die Zumischung (6) des kationischen Neutralisierungsmittels (CH) in das Filtrat (F) der zweiten Stufe erfolgt.

12. Verfahren nach Anspruch 11,
**dadurch gekennzeichnet**,
daß Filtrat (F ''') der ersten Eindickung (5) wieder zur Bildung der wässrigen Suspension (S') aus dem Trockenausschuß (S) verwendet wird.

13. Verfahren nach Anspruch 11 oder 12,
**dadurch gekennzeichnet**,
daß das Filtrat F''' der ersten Eindickung (5) zumindest teilweise dem Filtrat F der zweiten Eindickung (5') zugemischt wird.

14. Verfahren nach Anspruch 11, 12 oder 13 ,
**dadurch gekennzeichnet**,
daß gereinigtes Filtrat (F'') der zweiten Stufe zur Verdünnung des eingedickten Stoffes der ersten Stufe verwendet wird.

15. Verfahren nach einem der voranstehenden Ansprüche,
**dadurch gekennzeichnet**,
daß die Suspension vor der Eindickung in einem Hydrozyklon von Schwerteilen gereinigt wird.

16. Verfahren nach einem der voranstehenden Ansprüche,
**dadurch gekennzeichnet**,
daß die Suspension vor der Eindickung in einem Sortierer von Feststoffleilchen gereinigt wird, die aufgrund ihrer Form und Größe an den Sortieröffnungen abgewiesen werden.

17. Verfahren nach einem der voranstehenden Ansprüche,
**dadurch gekennzeichnet**,
daß die Suspension (S') bei einem Feststoffgehalt zwischen 2 % und 8 % entstippt wird.

18. Verfahren nach einem der voranstehenden Ansprüche,
**dadurch gekennzeichnet**,
daß als kationisches Neutralisierungsmittel (CH) ein kationisches Polymer verwendet wird.

19. Verfahren nach Anspruch 18,
**dadurch gekennzeichnet**,
daß als kationisches Neutralisierungsmittel (CH) ein Stoff der Art Poly-DADMAC verwendet wird.

20. Verfahren nach Anspruch 18,
**dadurch gekennzeichnet**,
daß als kationisches Neutralisierungsmittel (CH) ein Stoff der Art Dicyan-Diamid verwendet wird.

21. Verfahren nach Anspruch 18,
**dadurch gekennzeichnet**,
daß als kationisches Neutralisierungsmittel (CH) eine aluminiumionenhaltige Verbindung , wie z.B. Alaun verwendet wird.

22. Anlage zur Durchführung des Verfahrens nach einem der voranstehenden Ansprüche mit einem Ausschußauflöser (13) zur Aufnahme von Trockenausschuß (S) und Wasser (W), in dem eine Suspension (S') herstellbar ist und mit einer Dosierstation (20) zur Zumischung eines kationischen Neutralisierungsmittels (CH),
**dadurch gekennzeichnet**,
daß die aus Wasser und Trockenausschuß gebildete Suspension in einer Siebpresse (17) eingedickt wird, wobei ein Hochkonsistenzstoff (H) und ein Filtrat (F) entsteht und daß das Filtrat (F) mit einem Neutralisierungsmittel (CH) vermischt wird, in einer Flotationsvorrichtung (21) gereinigt und als Filtrat (F'') wieder dem Ausschußauflöser (13) zugepumpt werden kann.
